# EUROPÄISCHE PATENTSCHRIFT

(11) **EP 0 490 029 B1**
(45) Veröffentlichungstag und Bekanntmachung des Hinweises auf die Patenterteilung: **06.12.1995**
(21) Anmeldenummer: 91114970.6
(22) Anmeldetag: 05.09.1991
(51) Int. Cl.: G01S 17/88, G01S 7/48

(54) **Anordnung zur Verbesserung der Sicht, insbesondere in Fahrzeugen**
Apparatus for improving visibility, in particular in vehicles
Appareil pour améliorer la visibilité en particulier dans les véhicules

(30) Priorität: 11.12.1990 DE 4039467
(43) Veröffentlichungstag der Anmeldung: 17.06.1992
(73) Patentinhaber: Daimler-Benz Aktiengesellschaft, 70546 Stuttgart (DE)
(72) Erfinder: Weidel, Edgar, Dipl.-Ing., W-7913 Senden (DE); Huber, Peter, Dipl.-Phys., W-7910 Neu-Ulm (DE)
(74) Vertreter: Weber, Gerhard, Dipl.-Phys.

(56) Entgegenhaltungen:
- EP-A- 0 358 628
- DE-A- 4 007 646
- FR-A- 2 257 095
- GB-A- 2 139 445
- GB-A- 2 224 175

## Beschreibung

Die Erfindung betrifft eine Anordnung zur Verbesserung der Sicht, insbesondere in Fahrzeugen nach dem Oberbegriff des Patentanspruchs 1.

Ein äußerst wichtiger Sicherheitsaspekt in Fahrzeugen wie Automobilen, LKWs, Omnibussen, Lokomotiven und in Flugzeugen ist eine ausgezeichnete Sicht bei allen Wetterverhältnissen. Schlechte Sichtverhältnisse bei Dunkelheit kombiniert mit nassen Fahrbahnen oder mit Nebel waren immer wieder Ursache für eine Reihe von Massenkarambolagen auf Autobahnen in den letzten Jahren, die bei besserer Sicht vermeidbar gewesen wären.

Bei der Analyse, wodurch schlechte Sichtverhältnisse zustandekommen, zeigt sich, daß mangelnde Lichtempfindlichkeit des Auges meist nicht die Ursache ist. Das Auge wäre durchaus in der Lage, auch bei geringer Beleuchtung eine Szene relativ gut wahrzunehmen. Ursache von schlechten Sichtverhältnissen ist jedoch im allgemeinen störendes helles Licht, das die Wahrnehmung der benötigten Szene-beispielsweise eines Straßenverlaufs behindert. Störendes Licht kann beispielsweise das Licht von falsch eingestellten oder aufgeblendeten Scheinwerfern entgegenkommender Fahrzeuge sein, ferner diffus rückgestreutes Licht der eigenen Scheinwerfer bei Nebel oder das helle Sonnenlicht zwischen zwei Tunneln. Derartiges Störlicht überfordert den Kontrastumfang und die Adaptionsfähigkeit des Auges, so daß eine Szene nur mehr unzureichend wahrnehmbar ist.

Bisher bekannte Ansätze zur Lösung dieses Problems beruhen entweder auf dem Einsatz von Infrarot-Wärmebildkameras oder sind als Radar-Abstandswarnanlagen ausgelegt. Infrarot-Wärmebildkameras sind aufgrund der verwendeten Materialien sehr teuer und daher für Massenanwendungen wenig brauchbar. Das räumliche Auflösungsvermögen des Mikrowellen-Radars ist auch bei mm-Wellen für die Erkennung einer Szene in Abständen von 5m bis 300m völlig unzulänglich.

Aus der FR-A- 2 257 095 ist ein System zur Hinderniserkennung für Straßenfahrzeuge bekannt, welches auf der kooperativen Wirkung einer fahrzeugeigenen Sende-Empfangs-Einrichtung für hochfrequente elektromagnetische Wellen und mit einem Hindernis, insbesondere fremden Fahrzeugen verbundenen Reflektoren beruht. Die ausgesandten Wellen sind polarisiert und die Reflektoren verändern die Polarisation in definierter Weise, was beim polarisationsselektiven Empfang zur Ausblendung von unerwünschten Echos oder Sendesignalen von Fremdfahrzeugen genutzt wird. Das System ermöglicht nur, die Gegenwart von mit einen systemkonformen Reflektor ausgestatteten Hindernissen festzustellen.

Die EP-A- 358 628 beschreibt ein System zur optischen Hinderniserkennung für ein Robot-Fahrzeug, bei welchem ein von einer Kamera aufgenommenes Bild automatisch ausgewertet und zur Fahrzeugsteuerung verwandt wird. Durch scharfe Bündelung von Beleuchtungsstrahlen kann über trigonometrische Beziehungen eine räumliche Einordnung von Hindernissen erfolgen.

Der Erfindung liegt die Aufgabe zugrunde, eine weitere Anordnung zur Verbesserung der Sicht, inbesondere in Fahrzeugen anzugeben.

Die Erfindung ist im Patentanspruch 1 beschrieben. Die Unteransprüche enthalten vorteilhafte Ausgestaltungen der Erfindung.

Wesentlich bei der Erfindung ist die Orthogonalität zwischen Sendepolarisation und Empfangspolarisation, wodurch eine erhebliche Verbesserung des Nutzsignal-Störsignal-Verhältnisses erreicht wird, wie noch eingehend beschrieben, und wodurch auf einfache Weise die Verträglichkeit mehrerer gleichartiger Anordnungen, z. B. in entgegenkommenden Fahrzeugen, gewährleistet ist.

Die Erfindung ist nachfolgend an Beispielen unter Bezugnahme auf die Abbildungen noch eingehend veranschaulicht. Dabei zeigt
- FIG. 1: eine Beleuchtungsoptik in Seitenansicht
- FIG. 2: eine Empfangsoptik in Seitenansicht
- FIG. 3: eine schematische Darstellung von Streusituationen.
- FIG. 4: eine erste Ausführung für die Anordnung von Beleuchtungsoptik und Empfangsoptik in Draufsicht
- FIG. 5: die Ausführung von FIG. 4 in Seitenansicht
- FIG. 6: eine weitere Ausführung für die Anordnung von Beleuchtungsoptik und Empfangsoptik in Seitenansicht
- FIG. 7: eine Anordnung mit einer Kamera als Empfangsoptik in Seitenansicht
- FIG. 8: die Anordnung nach FIG. 7 in Draufsicht
- FIG. 9: momentane Beleuchtungsverhältnisse in der Empfangsoptik für eine Anordnung nach FIG. 7 und 8.

Die erfindungsgemäße Anordnung besteht im wesentlichen aus den Baugruppen
- Beleuchtungsoptik
- Empfangsoptik
- Darstellungsoptik

die nachfolgend einzeln und in ihrem Zusammenwirken noch detailliert beschrieben sind. Bei allen Optiken seien elektronische Systeme zur Ansteuerung und Auswertung mit im Begriff eingeschlossen.

### 1. Beleuchtungsoptik

Die erfindungsgemäße Beleuchtungsoptik enthält eine Lichtquelle im nahen Infrarot (800 nm bis 2000 nm), zum Beispiel eine GaAs/GaAlAs Halbleiterlaser um 800 nm. Die maximale Lichtleistung liegt beispielsweise zwischen 500 mW und 5W und wäre damit vergleichbar mit der Lichtleistung normaler Scheinwerfer. Ist eine besonders große Reichweite des Systems gefordert und keine Gefährdung durch Blendung oder Augenschädigung zu befürchten, zum Beispiel bei Flugzeugen, so kann die Laserleistung auch wesentlich höher gewählt werden. Wird nur eine geringere Lichtleistung benötigt, so kann die Lichtleistung auch beispielsweise durch Verringerung des elektrischen Laserstroms unter den maximalen Wert abgesenkt werden.

Durch eine Scheinwerferoptik mit Linse und/oder Spiegel wird das Licht in den zur Überwachung vorgesehenen Raumwinkelbereich abgestrahlt.

Zur Ausleuchtung des Raumwinkelbereichs sind im Prinzip drei Vorgehensweisen zu unterscheiden
a) gleichzeitige Ausleuchtung des gesamten Bereichs durch zweidimensionale Strahlaufweitung des Laserstrahls
b) Aufweitung des Laserstrahls in nur einer Richtung bei gleichzeitiger enger Bündelung in der orthogonalen zweiten Richtung und Schwenken (scan) des ausgeleuchteten flachen Raumwinkelausschnitts in der zweiten Richtung
c) Schwenken eines gebündelten Laserstrahls in zwei Dimensionen zur abtastenden Ausleuchtung des gesamten Raumwinkelbereichs.

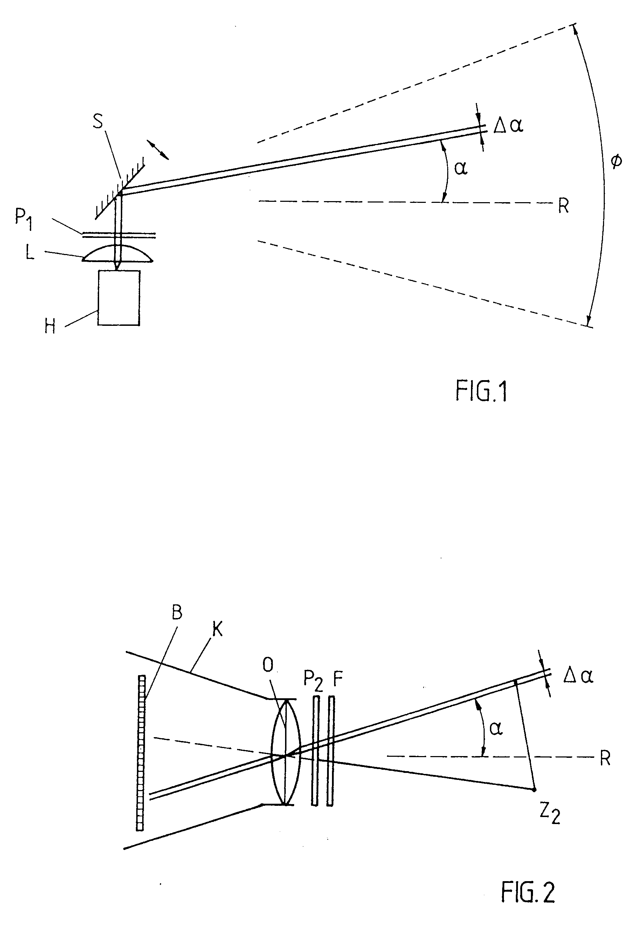

FIG. 1 zeigt die unter vorstehend b) beschriebene bevorzugte Ausführung der Beleuchtungsoptik mit einem Halbleiterlaser H, dessen Ausgangslicht über eine Linse L, beispielsweise eine Zylinderlinse oder eine Kombination von sphärischen und Zylinderlinsen, in der Zeichenebene eng gebündelt und senkrecht zur Zeichenebene entsprechend der Ausdehnung des Raumwinkelbereichs (beispielsweise 3^{o} bis 20⁰) aufgeweitet und über den Spiegel S in den vorgesehenen Überwachungsbereich gelenkt wird. Durch die enge Bündelung in der Zeichenebene wird nur ein flacher Auschnitt Δ α (z.B. Δ α = 0,05^{o} - bis 0,5^{o}) des gesamten Winkelbereichs 0 ausgeleuchtet. Durch Kippen des Spiegels kann die gegen eine Bezugsrichtung R eingetragene Winkellage α des flachen Winkelausschnitts Δ α verändert und so der gesamte Winkelbereich 0 überstrichen, d.h. der gesamte Raumwinkelbereich ausgeleuchtet werden. Die Bewegung des Spiegels und die Bildaufnahme in der Empfangsoptik sind synchronisiert. Anstelle des Kippspiegels kann auch eine rotierende Spiegelanordnung oder eine linear verschiebbare Linse vorgesehen sein.

Durch Ausrichten des Halbleiterlaserkristalls und eventuell durch ein zusätzlich eingefügtes Polarisationsfilter P1 wird die Polarisation des abgestrahlten Lichts eingestellt.

Bei den Ausführungen b) und c) kann durch eine zeitliche Modulation des Laserlichts, die durch eine zeitliche Variation des elektrischen Ansteuerstroms erreicht werden kann, die Helligkeit der Beleuchtung abhängig vom Abstrahlwinkel variiert werden, zum Beispiel bei der Ausführung b) abhängig vom Winkel α, so kann beispielsweise der Vordergrund einer Szene (z.B. ein Straßenverlauf) weniger hell beleuchtet werden als der Hintergrund; damit kann beispielsweise die mit zunehmender Entfernung zunehmende Schwächung des Laserlichts kompensiert und eine gleichmäßigere Ausleuchtung der Szene erreicht werden. Alternativ oder zusätzlich kann eine zeitliche Modulation mit höherer Frequenz durchgeführt werden. Die Modulation kann beispielsweise sinusförmig sein mit einer Frequenz von 1-10 KHz oder pulsförmig mit einer Pulslänge von 50-100 »s und einem Pulsabstand von 100-1000 »s. Damit kann eine Beleuchtung der Szene mit einem streifenförmigen oder punktförmigen Muster erreicht werden, wodurch eine plastische Hervorhebung von Gegenständen wie Autos und vom Straßenverlauf erzielt werden kann.

Die Lichtquelle kann immer voll aufgeblendet betrieben werden. Der Bündeldurchmesser des Lichts an der zugänglichen Austrittsfläche kann 5 cm bis 25 cm je nach Laserleistung betragen, um in jedem Fall die Augensicherheit zu gewährleisten; die Augensicherheit kann durch Ausweichen auf Wellenlängen um 1500 nm wesentlich erhöht werden.

### 2. Empfangsoptik

Die Empfangsoptik enthält eine Fernsehkamera, zum Beispiel eine CCD-Kamera, mit hoher Empfindlichkeit. Zur Erhöhung der Empfindlichkeit kann eine Bildverstärkung verwendet werden. Zur Kontrastverstärkung, Datailverstärkung und Bildspeicherung kann ein Videosignalprozessor benutzt werden. Die Kamera beobachtet die beleuchtete Szene, zum Beispiel einen Straßenverlauf oder ein Landefeld.

Vor der Optik O der Kamera K ist ein Polarisationsfilter P2 angebracht, dessen Durchlaßrichtung senkrecht zur Richtung des emittierten Laserlichts steht; dieses Polarisationsfilter sperrt somit den Durchgang des eigenen emittierten Lichts und das Licht entgegenkommender Fahrzeuge gleicher Polarisation auf beispielsweise einen Wert von 10⁻³ bis 10⁻⁵; eine gleiche Polarisationsrichtung ist für alle Fahrzeuge vorzusehen, eventuell auch durch eine geregelte Ausrichtung nach dem Schwerefeld der Erde auf exakt lotrecht oder horizontal.

Weiter ist vor der Optik O der Kamera ein spektrales Linienfilter F angeordnet, das für das anordnungseigene Laserlicht durchlässig ist, jedoch eine hohe Sperrung für das restliche sichtbare und infrarote Spektrum aufweist, also sowohl das Tageslicht als auch das normale Scheinwerferlicht entgegenkommender Fahrzeuge stark dämpft, beispielsweise auf einen Wert von 10⁻³ bis 10⁻⁵ .

Zusätzlich kann zur weiteren Reduzierung von Störlicht auch ein nicht gezeigtes räumliches Absorptionsfilter vor der Kamera angebracht werden, das zum Beispiel die unteren Bereiche des Bildes schwächt und damit den heller ausgeleuchteten Vordergrund schwächt zugunsten des weniger ausgeleuchteten Hintergrunds. Eine weitere Alternative dazu stellt ein spatialer Lichtmodulator vor der Kamera dar, der dann gezielt nur die zu hellen Partien des Bildes im Kamerasystem schwächt. Ein derartiger Lichtmodulator kann zum Beispiel als Flüssigkristall-Modulator aufgebaut sein.

Die Optik O der Kamera erzeugt auf der lichtempfindlichen Bildfläche B der Kamera ein Bild des ausgeleuchteten Bereichs, das dann weiter ausgewertet werden kann.

Je nach Ausführung der Beleuchtungsoptik entsteht das Bild in der Kamera gleichzeitig auf der gesamten Bildfläche oder einzelne Bildteile entstehen entsprechend der abtastenden Ausleuchtung des Raumwinkelbereichs zeitlich nacheinander. Bei Einsatz der bevorzugten Ausführungsform (b) der Beleuchtungsoptik mit einem in einer Ebene breiten, senkrecht dazu stark fokussierten (Δ α) Lichtbündel, das über den Überwachungswinkelbereich ø geschwenkt wird (FIG. 1), werden vorteilhafterweise mit dem Schwenkwinkel α des beleuchteten Bündels synchronisierte Maßnahmen in der Empfangsoptik getroffen, die gewährleisten, daß nur Licht aus dem beleuchteten Streifen zum Bildaufbau beiträgt und durch Mehrfachstreuung aus anderen Winkelbereichen einfallendes Licht nicht störend wirksam wird. Dies kann beispielsweise durch eine synchron mit der Lichtbündelschwenkung bewegte streifenförmige Blende in der Empfangsoptik erfolgen. Vorzugsweise wird aber für die Bildaufnahme in der lichtempfindlichen Bildfläche B eine Anordnung mit zeilenweise getrennt elektrisch ansteuerbaren lichtempfindlichen Elementen eingesetzt und es werden jeweils nur die Elemente der Zeile(n), die dem momentan von der Beleuchtungsoptik ausgeleuchteten Winkelausschnitt entsprechen, aktiviert. Alternativ dazu kann auch nur ein schmaler Streifen mit einer oder wenigen Zeilen der Bildfläche in Verbindung mit einem bewegten Spiegel oder einer bewegten Linse ähnlich der bei der Beleuchtungsoptik geschilderten Ablendemechanismus vorgesehen sein, so daß verschiedene Bildteile zeitlich nacheinander von denselben lichtempfindlichen Elementen aufgenommen werden.

### 3. Darstellung

Das von der Empfangsoptik aufgenommene Bild wird durch die Darstellungsoptik dem Fahrer (oder Piloten) in geeigneter Weise angezeigt. Vorzugsweise wird hierfür ein aus der Empfangsoptik abgeleitetes Bild in das Sichtfeld des Fahrers oder Piloten projiziert. Das Bild wird hierzu beispielsweise als Fernsehbild auf einem Bildschirm erzeugt und nach Art eines Head-up-Displays auf die Windschutzscheibe projiziert. Damit das projizierte Bild des Beobachtungsraums und das vom Auge direkt beobachtete Bild möglichst gut zur Deckung gelangen und um bei allen Helligkeitsverhältnissen ein ausreichend helles und kontrastreiches Bild vorliegen zu haben, sind vorteilhafterweise die Lage und die Helligkeit des projizierten Bilds veränderlich einstellbar. Die Einstellung kann manuell und/oder automatisch vorgesehen sein. Für die automatische Bildverschiebung könnte beispielsweise über ein Meßsystem mit Infrarot-LED und Fernsehkamera die Position der Augen des Fahrers oder Piloten bestimmt und daraus die optimale Einstellung der Darstellungsoptik abgeleitet werden.

Anstelle des ins Lichtfeld projizierten Bildes kann selbstverständlich auch eine andere Darstellungsweise, z.B. ein separater Bildschirm oder in Verbindung mit weiteren Auswerteeinrichtungen auch ein optisches und/oder akustisches Warnsignal für automatisch erkannte Gefahrsituationen vorgesehen sein. Ein gesonderter Bildschirm kann z.B. auch vorgesehen sein für die Beobachtung in Rückwärtsrichtung.

### 4. Zusammenwirken.

Die Erfindung macht sich vor allem den an sich bekannten Effekt zunutze, daß auf eine diffus reflektierende Oberfläche gestrahltes Licht nach der Reflexion nicht mehr polarisiert ist. Der Grad der Restpolarisation ist abhängig von der Beschaffenheit der Oberfläche. In den weitaus meisten Fällen ist das diffus reflektierte Licht nahezu unpolarisiert, teilweise ist auch zirkulare oder elliptische Polarisation zu beobachten. Für die vorliegende Erfindung bedeutet dies, daß das von beleuchteten Gegenständen, Personen, Häusern, Bäumen, anderen Fahrzeugen, Retroreflektoren, Fahrbahn bzw. Landebahn usw. reflektierte Licht weitgehend unpolarisiert ist und somit ein etwa zwischen 30% und 50% liegender Anteil dieses diffus reflektierten Lichts von der polarisationsselektiven Empfangsoptik aufgenommen werden kann. Dieser Anteil stellt das Nutzsignal in der Empfangsoptik dar.

Demgegenüber stellen das Infrarotlicht entgegenkommender Fahrzeuge und das an Nebel, Wassertröpfchen und dergleichen rückgestreute Licht der eigenen Beleuchtungsoptik Störsignale für die Bildauswertung in der Empfangsoptik dar und sind daher soweit wie möglich zu unterdrücken.

Das Infrarotlicht entgegenkommender Fahrzeuge mit gleichartiger Infrarotbeleuchtungsoptik wird auf einfache Weise weitestgehend dadurch unterdrückt, daß in allen Anordnungen dieselben Sendepolarisationen, horizontal oder vertikal, vorgesehen sind. Das Infrarotlicht entgegenkommender Fahrzeuge ist dann senkrecht zur Empfangspolarisation der eigenen Beleuchtungsoptik polarisiert und wird vom Polarisator P2 wirksam ausgeblendet.

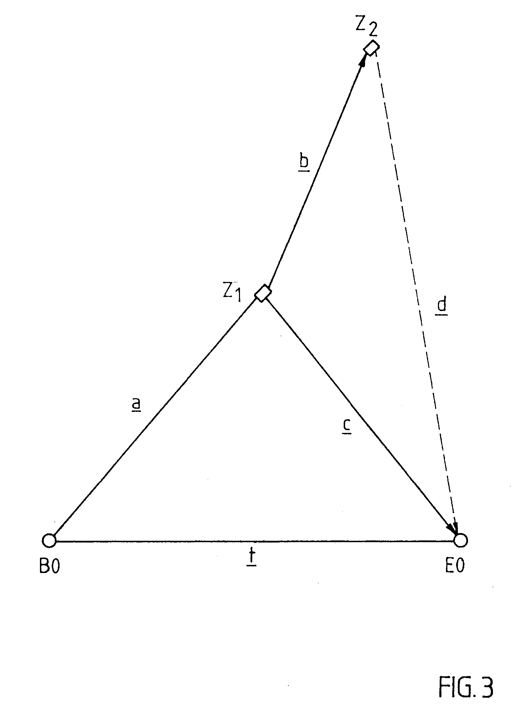

Die Rückstreuung des Lichts an molekularen Streuteilchen wird als Rayleigh-Streuung, an größeren Streuteilchen wie z.B. Wassertröpfchen als Mie-Streuung bezeichnet. Bei beiden Arten der Streuung ist das direkt rückgestreute Licht linear polarisiert mit derselben Polarisation wie das emittierte Licht, wenn die Sendepolarisation in der Beobachtungsebene liegt, die durch den Ort der Beleuchtungsoptik BO, der Empfangsoptik EO und der Beleuchtungsrichtung a (bzw. Beobachtungsrichtung c) aufgespannt ist, oder senkrecht auf dieser Ebene steht. Unter dieser Voraussetzung ist also das direkt rückgestreute Licht gleich polarisiert wie das emittierte Licht und wird vom Polarisator P2 der Empfangsoptik unterdrückt. Da zu Ausblendung der Infrarot-Beleuchtung von entgegenkommenden Fahrzeugen die Sendepolarisation nur horizontal oder vertikal sein kann, werden Beleuchtungsoptik und Empfangsoptik eines Fahrzeugs vorteilhafterweise vertikal übereinander oder horizontal nebeneinander (Vektor t in FIG. 3) angeordnet.

Die beschriebene Polarisationserhaltung gilt nur für direkt rückgestreutes Licht. Bei Nebel tritt aber auch Mehrfachstreuung auf, die bewirkt, daß Störlicht auch mit anderer Polarisation auf die Empfangsoptik EO fällt und vom Polarisator P2 nicht mehr vollständig unterdrückt werden kann. In FIG. 3 ist für den Fall der Mehrfachstreuung ein Streupunkt Z1 betrachtet der Licht von der Beleuchtungsoptik BO nicht nur in Richtung c direkt zur Empfangsoptik sondern auch in andere Richtungen, beispielsweise b streut. Das in Richtung b gestreute Licht wird an einem zweiten Streupunkt Z2 erneut gestreut, z.B. auch in Richtung d auf die Empfangsoptik EO. Der Streupunkt Z1 kann als neue Lichtquelle für die Mehrfachstreuung angesehen werden. Die Beobachtungsebene ist dann nicht mehr durch a und t aufgespannt, sondern durch b und t. Die beiden Ebenen schneiden sich im allgemeinen unter einen von O⁰ und 90^{o} verschiedenen Winkel und die Polarisationsrichtung des von Z2 in Richtung d gestreuten Lichts liegt nicht parallel zur Sendepolarisation, d.h. das von 72 zur Empfangsoptik rückgestreute Licht hat im Regelfall eine parallel zum Polarisator P2 der Empfangsoptik polarisierte Komponente, die sich als Störlicht bemerkbar macht. Berücksichtigt man die Mehrfachstreuung über den gesamten Raumwinkel, so ergibt sich eine Depolarisation des Licht, die je nach Dichte der Streupunkte (Nebel) bei 10% bis 40% liegen kann.

Die in FIG. 1 und 2 skizzierte und bereits beschriebene Kombination der Ausleuchtung und Beobachtung nur eines flachen Winkelausschnitts Δ α reduziert den störenden Einfluß durch Mehrfachstreuung oder durch Fremdlicht erheblich, da lediglich ein geringer Teil des sich über einen wesentlich größeren Raumbereich verteilenden Störlichts erfaßt wird und dadurch gegenüber einer nicht überdeckend raumwinkelselektionen Beleuchtung und Beobachtung das Nutzsignal/Störsignal-Verhältnis stark verbessert wird.

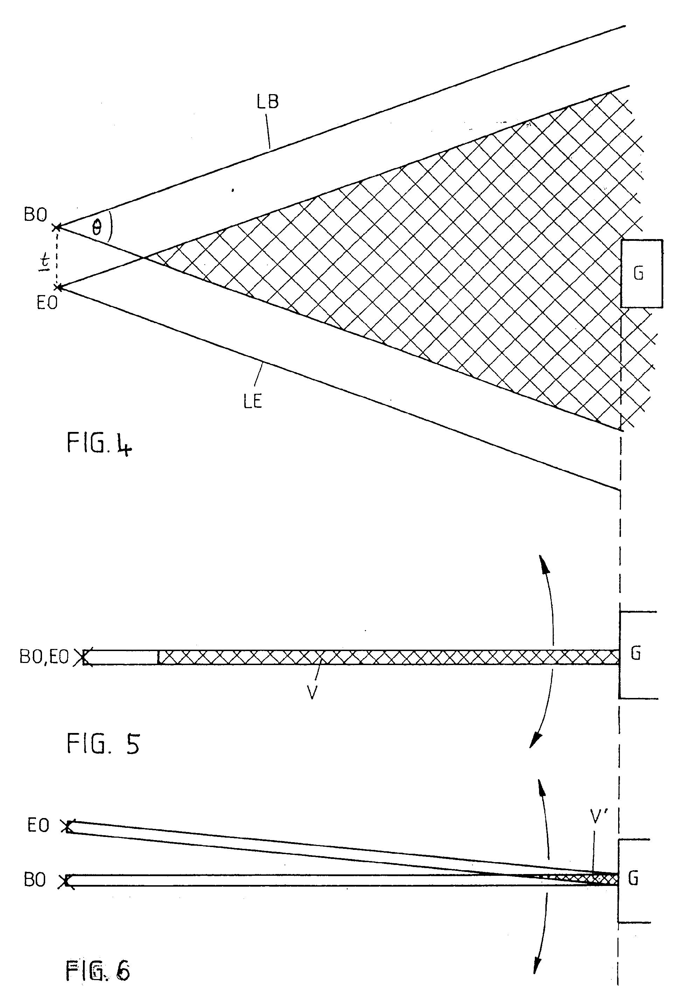

Eine erste Ausführung für die Anordnung von Beleuchtungsoptik und Empfangsoptik ist in FIG. 4 und FIG. 5 skizziert. Das von der Beleuchtungsoptik BO erzeugte Lichtbündel LB ist in einer Dimension, z. B. vertikal eng gebündelt (z. B. Δα = 0,05^{o}) und über einen Winkelbereich 0̸ = 15^{o}) schwenkbar. Der Schwenkwinkel gegen eine Bezugsrichtung R ist mit α bezeichnet. Senkrecht zur Zeichenebene der FIG. 1 ist das Lichtbündel auf einen Winkel ϑ (z. B. ϑ = 20^{o}) aufgeweitet, was in der Aufblickskizze nach FIG. 4 dargestellt ist. Der von der Empfangsoptik überwachte Raumwinkelbereich LE ist in derselben Ebene wie das Lichtbündel LB aufgeweitet und senkrecht dazu eng fokussiert, so daß sich Lichtbündel und Aufnahmeraumwinkel weitgehend überdecken und den schraffierten Beobachtungsbereich (FIG. 4, FIG. 5) bilden, in welchem sich beispielsweise ein Gegenstand G befindet. Lichtbündel und Aufnahmeraumwinkel sind zur Raumabtastung synchron um eine zur Verbindungslinie t zwischen Empfangsoptik und Beleuchtungsoptik parallele Achse schwenkbar. Das von dem Gegenstand G aus dem durch das Lichtbündel beleuchteten Ausschnitt reflektierte Licht wird mit der zum emittierten Licht senkrecht polarisierten Komponente von der Empfangsoptik EO aufgenommen.

Durch Mehrfachstreuung außerhalb des Winkelausschnitts Δα, z.B. Z2 (siehe FIG. 2) rückgestreutes depolarisiertes Licht zwar zumindest teilweise den Polarisator P2 durchdringt, aber aufgrund einer Streifenblende ausgeblendet wird oder auf nicht aktivierte Elemente der Bildfläche der Kamera trifft und so in der Empfangsoptik nicht wirksam wird. Neben dem vom Gegenstand G reflektierten Licht wird aber aus dem gesamten Volumen V des Beobachtungsbereichs noch Störlicht zur Empfangsoptik rückgestreut. Zur Unterdrückung dieses Störlichts, das parallel zum von der Beleuchtungsoptik abgestrahlten Licht polarisiert ist, enthält die Empfangsoptik das Polarisationsfilter P2.

Eine weitere deutliche Reduzierung des Einflusses dieses Störlichts ist gemäß einer bevorzugten Ausführungsform dadurch möglich, daß die Empfangsoptik nicht in der Ebene des Lichtbündels LB, sondern aus dieser heraus versetzt angeordnet ist, wie in FIG. 6 skizziert. Eine Überlappung des Lichtbündels LB mit dem Aufnahmeraumwinkel LE findet nur noch in einem vergleichsweise kleinen Volumenabschnitt V′ statt, so daß auch Störlicht nur noch aus diesem kleinen Volumen dem vom Gegenstand G in den eng fokussierten Aufnahme-Raumwinkel zur Beleuchtungsoptik reflektierten Nutzlicht überlagert ist. Da außerdem die Überlappung erst in einem von der Beleuchtungsoptik und der Empfangsoptik entfernteren Bereich stattfindet, wo die Lichtintensität (= Lichtleistung pro Fläche) sowohl durch die Divergenz des Lichts als auch durch die Verluste in Nebel oder dgl. bereits deutlich geringer ist als im Nahbereich der Objektive, ergibt sich eine erhebliche Reduktion des auf die Empfangsoptik rückgestreuten Lichts, wogegen das vom Gegenstand reflektierte Licht von dieser Maßnahme nicht beeinflußt wird.

Da der Überlappungsbereich des Lichtbündels und des fächerförmigen Aufnahmeraumwinkels in FIG. 6 nur einen Entfernungsabschnitt abdeckt, wird vorteilhafterweise der Aufnahmeraumwinkel LE in Schwenkrichtung breiter gewählt als das Lichtbündel LB. Vorzugsweise werden mehrere Teil-Raumwinkel LE1, LE2, ... gleichzeitig durch die Beleuchtungsoptik überwacht. Mehrere Teil-Raumwinkel entsprechen beispielsweise in der Beleuchtungsoptik mehreren Detektorzeilen einer Kamera. Die Anordnung der Detektorelemente in der Bildebene der Kamera legt in Verbindung mit der Brennweite der Kamera-Abbildungsoptik die Geometrie der Teil-Raumwinkel fest.

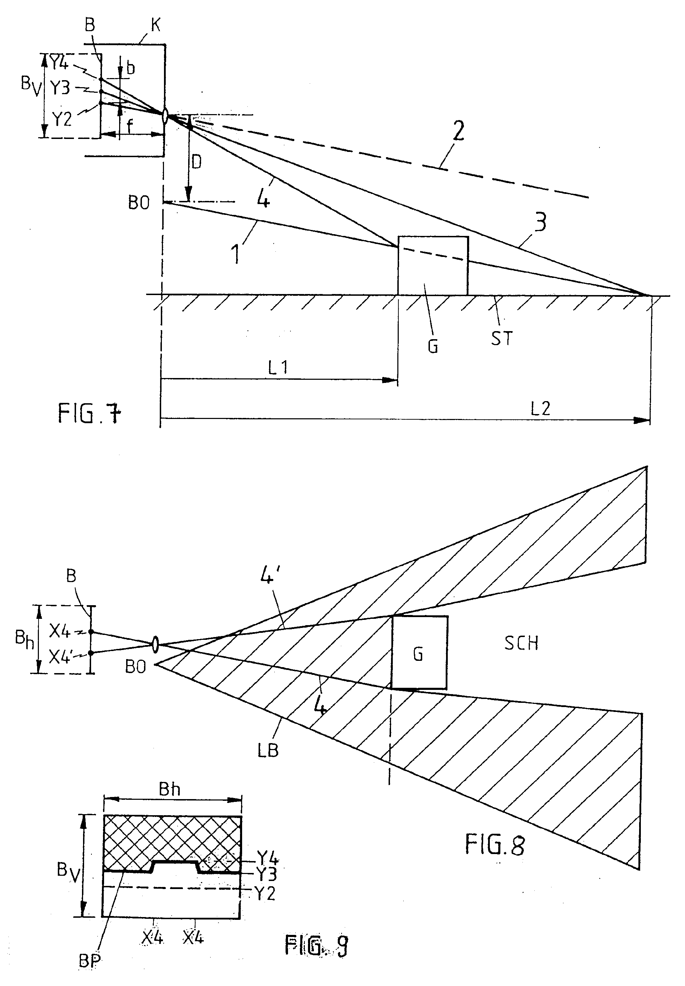

FIG. 7 zeigt eine Seitenansicht der Anordnung mit im vertikalen Abstand D oberhalb der Beleuchtungsoptik BO angeordneter Empfangsoptik EO mit einer Kamera K der Brennweite f. Auf einer Fahrbahn ST befinde sich ein Gegenstand G im Beobachtungsbereich. Zur Veranschaulichung sind in FIG. 7 die eng fokussierten Winkelbereiche von Lichtbündel und Teil-Raumwinkel durch Strahlen bzw. Linien repräsentiert. FIG. 8 zeigt, wie FIG. 4, eine Draufsicht auf die Anordnung.

Das vor der Beleuchtungsoptik erzeugte, in der Zeichenebene stark fokussierte Lichtbündel ist in FIG. 7 als Strahl 1 eingezeichnet. Dieser Strahl trifft zum einen im Abstand L1 auf den Gegenstand G, von dem ein Strahl 4 zur Empfangsoptik reflektiert wird und dort in der Bildebene B der Kamera K auf die Position Y4 abgebildet wird. Zum anderen trifft der Strahl 1 an dem Gegenstand vorbei in der Entfernung L2 auf die Fahrbahn, von der ein Strahl 3 zur Kamera reflektiert wird und in die Position Y3 der Bildebene abgebildet wird. Der zum Strahl 1 parallele Strahl, der von einem im unendlichen liegenden Gegenstand reflektiert würde, träfe in der Position Y2 auf die Bildebene B. Die vertikale Höhe der Bildebene ist mit BV bezeichnet und deckt den vertikalen Winkelbereich 0̸ ab. Da die Position Y2 mit der Winkelstellung des Strahls 1 korreliert ist, kann bei fester Winkelstellung aus der Differenz b der vertikalen Positionen Y2, Y4 die Entfernung L1 des Gegenstands bestimmt werden als L1 = f x D/b. Damit ist eine Möglichkeit zur Messung von Entfernungen gegeben. Abhängig vom Abstand D und der Brennweite f umfaßt die zur Entfernungsbestimmung genutzte Differenz b beispielsweise zwischen zwei und zwanzig Detektorzeilen der Kamera.

Da die Empfangsoptik aus der Ebene des Lichtbündels heraus versetzt ist, können Beleuchtungsoptik und Empfangsoptik auch in einer senkrecht auf der Ebene des Lichtbündels stehenden Ebene, im skizzierten Beispiel also übereinander im Abstand D angeordnet werden.

In FIG. 8 ist eine Draufsicht auf die Situation nach FIG. 7 skizziert. Das von der Beleuchtungsoptik abgestrahlte Lichtbündel LB trifft in der Entfernung L1 auf den Gegenstand G und beleuchtet einen schmalen Streifen auf dessen den Optiken zugewandter Seite. Auf der den Optiken abgewandten Seite wirft der Gegenstand G einen Schattenbereich SCH. Die seitlich am Gegenstand vorbeiführenden Teile des Lichtbündels treffen in der Entfernung L2 auf die Fahrbahn. Das von dem auf dem Gegenstand G beleuchteten Streifen zur Empfangsoptik reflektierte Licht, durch die Randstrahlen 4, 4′ repräsentiert, welche in der Bildebene B der Kamera in die Positionen X4 bzw. X4′ abgebildet werden, führt in der Bildebene zu einem horizontalen Streifen der Länge g zwischen X4 und X4′ bei der vertikalen Position Y4. Das von der Fahrbahn in der Entfernung L2 zur Empfangsoptik EO reflektierte Licht führt in der Bildebene zu seitlich von X4, X4′ innerhalb der Breite Bh der Bildebene liegenden Streifen bei einer vertikalen Position Y3. In der zweidimensionalen Bildebene B entsteht dadurch für die angenommene Winkelstellung des Lichtbündels die in der Darstellung der Bildebene nach FIG. 9 dick eingezeichnete Linie BP. Diese kann in sich noch Intensitätsvariationen aufweisen. Beim Schwenken des Lichtbündels entstehen jeweils neue Bildteile, die zusammengesetzt eine flächige Darstellung des gesamten Beobachtungsraums (0̸, ϑ) ergeben.

Darüberhinaus ist bei einer Anordnung mit aus der Ebene der Aufweitung des Lichtbündels heraus versetzter Empfangsoptik eine Verringerung des Einflusses von Störlicht, das aus dem Beobachtungsraum in die Empfangsoptik gestreut wird, möglich. Hierbei wird die Erkenntnis zugrunde gelegt, daß das Störlicht in benachbarten Beobachtungsraumteilwinkeln mit annähernd gleicher Intensität auftritt. Durch Korrelation der von getrennten Detektorelementen aus den zugeordneten Raumwinkelbereichen und/oder durch Korrelation zeitlich getrennt gewonnener Informationen über die Intensitätsverteilung des in der Empfangsoptik aufgenommenen Lichts kann das Nutzlichtsignal aus einem evtl. vorhandenen Störhintergrund hervorgehoben werden.

Eine Weiterbildung der Erfindung sieht vor, das im Nebel diffus rückgestreute Licht nicht nur als Störbeitrag zu werten, sondern die darin als Schattenkonturen von im Beobachtungsraum befindlichen Gegenständen noch enthaltenen Informationen gezielt, z. B. durch intelligente Bildverarbeitung, auszuwerten. Hierbei können sowohl die zum emittierten Licht parallel als auch die senkrecht dazu polarisierte Komponente ausgewertet werden, oder es kann auf ein Polarisationsfilter ganz verzichtet werden. Bei Ausnutzung der senkrecht zum emittierten Licht polarisierten Komponente im rückgestreuten Licht, was dessen Depolarisation bei der diffusen Streuung im Nebel voraussetzt, tritt der vorteilhafte Effekt auf, daß im Nahbereich zwar eine hohe Beleuchtungsintensität, aber eine geringe Depolarisation gegeben ist, während in größerer Entfernung die Depolarisation zunimmt, aber die Intensität geringer ist; so daß die Intensitätsdynamik des in der Empfangsoptik wirksamen Streulichts über die Entfernung gering ist.

In FIG. 8 ist der von der Beleuchtungsoptik ausgeleuchtete-Bereich, aus dem Licht zur Empfangsoptik zurückgestreut wird, schraffiert. Daraus kann abgeleitet werden, daß in dem horizontalen Bildbereich zwischen X4 und X4′ Rückstreuung bis zu einer Entfernung L1, in den seitlichen Bildabschnitten bis zu einer Entfernung L2 auftritt. In Verbindung mit FIG. 9 ergibt sich daraus, daß im horizontalen Bildabschnitt zwischen X4 und X4′ rückgestreutes Licht die Bildebene vom oberen Rand bis zur Position Y4 aufhellt, während in den horizontal seitlichen Abschnitten der in FIG. 9 schraffierte helle Bereich bis zur vertikalen Position Y3 reicht. Da der helle Bereich des rückgestreuten Lichts jeweils dort endet, wo ein Gegenstand oder die Fahrbahn die weitere Ausbreitung des Lichts stoppt, kann aus der Schattenkontur in der Bildebene ein Abschnitt des Umrisses des Gegenstands entnommen werden. Durch Schwenken des Lichtbündels und jeweils Neuaufnahme eines Bildes kann der gesamte Gegenstand abgetastet und dargestellt werden. Da nur die Schattengrenze ausgenutzt wird, ist der Kontrast des Gegenstands zur Umgebung unabhängig von den Reflexionseigenschaften des Gegenstands. Der Kontrast kann bei dieser Art der Auswertung in gewissem Umfang durch Erhöhen der Intensität des rückgestreuten Lichts gesteigert werden, wobei jedoch eine Begrenzung durch störende Mehrfachstreuung zu beachten ist.

Da das infrarote Licht vom Auge nicht detektiert wird und eine Störung von Empfangsoptiken entgegenkommender Fahrzeuge wegen der Orthoganalität von Sende- und Empfangspolarisation ausgeschlossen ist, kann die Beleuchtungsoptik immer voll aufgeblendet werden.

Durch die Aufweitung des Lichtbündels in einer Richtung ist auch ausreichende Augensicherheit gewährleistet.

Die Erfindung ist nicht auf die beschriebene bevorzugte Anwendung in Straßenfahrzeugen beschränkt, sondern allgemein von Vorteil zur Verbesserung der Sicht, beispielsweise auch in stationären Beobachtungseinrichtungen.

## Patentansprüche

1. Anordnung zur Verbesserung der Sicht, insbesondere in Fahrzeugen bei Dunkelheit, schlechter Witterung und Nebel, mittels Ausstrahlung und Empfang elektromagnetischer Wellen, wobei
- eine Beleuchtungsoptik infrarotes Licht mit festgelegter linearer Sendepolarisation in einen vorgegebenen Raumwinkelbereich abstrahlt
- eine Empfangsoptik reflektierte Anteile des abgestrahlten Lichts in zur Sendepolarisation orthogonaler Empfangspolarisation empfängt und
- eine Anzeigeoptik ein von der Empfangsoptik aufgenommenes Bild anzeigt.

2. Anordnung nach Anspruch 1, dadurch gekennzeichnet, daß das emittierte Licht als Lichtbündel, das in einer Ebene aufgeweitet und senkrecht dazu eng gebündelt ist, abgestrahlt wird, und daß das Lichtbündel in Richtung der engen Bündelung schwenkbar ist.

3. Anordnung nach Anspruch 2, dadurch gekennzeichnet, daß die Schwenkung des Lichtbündels mittels eines bewegten Spiegels erfolgt.

4. Anordnung nach Anspruch 2 oder 3, dadurch gekennzeichnet, daß die Empfangsoptik aus der Ebene der Lichtbündelaufweitung heraus versetzt angeordnet ist.

5. Anordnung nach einem der Ansprüche 1 bis 4, dadurch gekennzeichnet, daß in der Empfangsoptik Einrichtungen zur Beschränkung des momentanen Beobachtungsraums auf einen gleichzeitig von der Beleuchtungsoptik beleuchteten Winkelausschnitt vorgesehen sind.

6. Anordnung nach einem der Ansprüche 1 bis 5, dadurch gekennzeichnet, daß die Empfangsoptik eine Bildfläche mit zeilen- und/oder spaltenweise getrennt elektronisch aktivierbaren lichtempfindlichen Detektorelementen aufweist.

7. Anordnung nach einem der Ansprüche 1 bis 6, dadurch gekennzeichnet, daß die Empfangsoptik eine CCD-Kamera mit in einer Zeilen-Spalten-Matrix angeordneten lichtempfindlichen Detetektorelementen enthält.

8. Anordnung nach Anspruch 6 oder 7, dadurch gekennzeichnet, daß für jede Winkelstellung des Lichtbündels mehrere Detektorzeilen (oder-spalten) der Empfangsoptik ausgewertet werden.

9. Anordnung nach einem der Ansprüche 1 bis 8, dadurch gekennzeichnet, daß eine Bildverarbeitungseinrichtung Schattenkonturen in von der Empfangsoptik erzeugten Bildern bestimmt und auswertet.

10. Anordnung nach einem der Ansprüche 1 bis 9, dadurch gekennzeichnet, daß die Polarisation des abgestrahlten Lichts parallel oder senkrecht zu der Ebene der Lichtbündelaufweitung liegt.

11. Anordnung nach einem der vorhergehenden Ansprüche, dadurch gekennzeichnet, daß das abgestrahlte Licht horizontal oder vertikal polarisiert ist.

12. Anordnung nach einem der vorhergehenden Ansprüche, gekennzeichnet durch ein spektrales Linienfilter (F) in der Empfangsoptik.

13. Anordnung nach einem der vorhergehenden Ansprüche, dadurch gekennzeichnet, daß die Beleuchtungsoptik einen Halbleiterlaser enthält.

14. Anordnung nach einem der vorhergehenden Ansprüche, dadurch gekennzeichnet, daß die Anzeigeoptik ein aus den Bildinformationen der Empfangsoptik abgeleitetes Bild in das Gesichtsfeld des Fahrers projiziert.

## Claims

1. Arrangement for improving the visibility, in particular in vehicles, in darkness, bad weather and fog by means of radiation and reception of electromagnetic waves, wherein
- an optical illumination system radiates infrared light of fixed linear transmitted polarisation into a preset solid angle region,
- an optical receiving system receives reflected components of the radiated light in a received polarisation orthogonal to the transmitted polarisation and
- an optical display system displays an image picked up by the optical receiving system.

2. Arrangement according to claim 1, characterised thereby, that the emitted light is radiated as a light beam which is spread out in one plane and focussed narrowly perpendicularly thereto and that the light beam is pivotable in the direction of the narrow focussing.

3. Arrangement according to claim 2, characterised thereby, that the pivotation of the light beam takes place by means of a moved mirror.

4. Arrangement according to claim 2 or 3, characterised thereby, that the optical receiving system is arranged to be displaced out of the plane of the spreading of the light beam.

5. Arrangement according to one of the claims 1 to 4, characterised thereby, that equipments for the restriction of the instantaneous observation space to an angular sector simultaneously illuminated by the optical illuminating system are provided in the optical receiving system.

6. Arrangement according to one of the claims 1 to 5, characterised thereby, that the optical receiving system comprises an image area with light-sensitive detector elements which are electronically activatable separately line by line and/or column by column.

7. Arrangement according to one of the claims 1 to 6, characterised thereby, that the optical receiving system contains a charge-coupled-device camera with light-sensitive detector elements which are arranged in a matrix of lines and columns.

8. Arrangement according to claim 6 or 7, characterised thereby, that several detector lines (or columns) of the optical receiving system are evaluated for each angular setting of the light beam.

9. Arrangement according to one of the claims 1 to 8, characterised thereby, that an image-processing equipment ascertains and evaluates shadow outlines in images produced by the optical receiving system.

10. Arrangement according to one of the claims 1 to 9, characterised thereby, that the polarisation of the radiated light lies oarallelly or perpendicularly to the plane of the spreading of the light beam.

11. Arrangement according to one of the preceding claims, characterised thereby, that the radiated light is horizontally or vertically polarised.

12. Arrangement according to one of the preceding claims, characterised by a spectral line filter (F) in the optical receiving system.

13. Arrangement according to one of the preceding claims, characterised thereby, that the optical illuminating system contains a semiconductor laser.

14. Arrangement according to one of the preceding claims, characterised thereby, that the optical display system projects an image, which is derived from the image information data of the optical receiving system, into the field of view of the driver.

## Revendications

1. Dispositif pour améliorer la visibilité, notamment dans les véhicules pendant l'obscurité, par mauvais temps et sous le brouillard, par émission et réception d'ondes électromagnétiques, dispositif dans lequel
- une optique d'éclairage émet de la lumière infrarouge avec une polarisation d'émission linéaire donnée et dans une zone d'angle solide prédéterminée
- une optique de réception reçoit des fractions réfléchies de la mière émise en une polarisation de réception orthogonale par rapport à la polarisation d'émission et
- une optique d'affichage affiche une image enregistrée par l'optique de réception.

2. Dispositif selon la revendication 1, caractérisé en ce que la lumière émise est rayonnée comme un faisceau lumineux qui est élargi dans un plan et fortement concentré perpendiculairement à ce plan, et que le faisceau lumineux peut être animé d'un pivotement dans la direction de sa forte concentration.

3. Dispositif selon la revendication 2, caractérisé en ce que le pivotement du faisceau lumineux est produit au moyen d'un miroir animé d'un mouvement.

4. Dispositif selon la revendication 2 ou 3, caractérisé en ce que l'optique de réception est décalée hors du plan de l'élargissement du faisceau lumineux.

5. Dispositif selon une des revendications 1 à 4, caractérisé en ce que l'optique de réception comporte des dispositifs pour limiter l'espace observé à un moment donné à une portion d'angle éclairée simultanément par l'optique d'éclairage.

6. Dispositif selon une des revendications 1 à 5, caractérisé en ce que l'optique de réception comporte une surface d'image avec des éléments capteurs photosensibles disposés séparément en lignes et/ou colonnes et activables électroniquement.

7. Dispositif selon une des revendications 1 à 6, caractérisé en ce que l'optique de réception est une caméra CCD (à couplage de charge) comportant des éléments capteurs photosensibles disposés dans une matrice de lignes et de colonnes.

8. Dispositif selon la revendication 6 ou 7, caractérisé en ce que plusieurs lignes (ou colonnes) de capteurs de l'optique de réception sont exploitées pour chaque position angulaire du faisceau lumineux.

9. Dispositif selon une des revendications 1 à 8, caractérisé en ce qu'un dispositif de traitement d'image détermine et exploite des contours d'ombre dans des images générées par l'optique de réception.

10. Dispositif selon une des revendications 1 à 9, caractérisé en ce que la polarisation de la lumière rayonnée est parallèle ou perpendiculaire au plan de l'élargissement du faisceau lumineux.

11. Dispositif selon une des revendications précédentes, caractérisé en ce que la lumière rayonnée est polarisée horizontalement ou verticalement.

12. Dispositif selon une des revendications précédentes, caractérisé par un filtre de raies spectrales (F) dans l'optique de réception.

13. Dispositif selon une des revendications précédentes, caractérisé en ce que l'optique d'éclairage contient un laser à semi-conducteur.

14. Dispositif selon une des revendications précédentes, caractérisé en ce que l'optique d'affichage projette dans le champ visuel du conducteur une image tirée des informations d'image de l'optique de réception.
